# EUROPÄISCHE PATENTSCHRIFT

(11) **EP 2 855 208 B1**
(45) Veröffentlichungstag und Bekanntmachung des Hinweises auf die Patenterteilung: **13.07.2016**
(21) Anmeldenummer: 13742379.4
(22) Anmeldetag: 29.05.2013
(51) Int. Cl.: B60R 5/04

(54) **MULTIFUNKTIONAL VERSTELLBARER LADEBODEN**
MULTIFUNCTIONAL ADJUSTABLE LOADING FLOOR
SURFACE DE CHARGEMENT À RÉGLAGE MULTIFONCTIONNEL

(30) Priorität: 30.05.2012 CZ 20120360
(43) Veröffentlichungstag der Anmeldung: 08.04.2015
(73) Patentinhaber: Skoda Auto A.S., 293 60 Mladá Boleslav (CZ)
(72) Erfinder: KOHLERT, Zdenek, 549 01 Nové Mesto nad Metuji (CZ)
(86) Internationale Anmeldenummer: PCT/CZ2013/000069
(87) Internationale Veröffentlichungsnummer: WO 2013/178199

(56) Entgegenhaltungen:
- EP-A1- 1 511 654
- EP-A1- 2 151 348
- CZ-A3- 20 090 590
- FR-A1- 2 821 035
- FR-A1- 2 877 624
- JP-A- 2010 076 571
- US-A1- 2009 250 958

## Beschreibung

### Technisches Gebiet

Die Erfindung betrifft einen multifunktional verstellbaren Ladeboden, insbesondere einen höhen- und raumverstellbaren Ladeboden des Kofferraumes eines Kraftfahrzeuges.

### Bisheriger Stand der Technik

Die Konstruktionsausführung des Kofferraumes bei Kraftfahrzeugen ist so ausgestaltet, dass der Kofferraum vorne durch die Rücksitzlehnen, seitlich durch die Seitenwände und hinten durch die Kofferraumheckklappe oder fünfte Tür eingegrenzt wird. Aus Festigkeitsgründen wird das Heck in der Regel so ausgebildet, dass die Seitenwände mit einem hinteren Steg verbunden sind, zu dem die fünfte Tür oder Kofferraumklappe zugeklappt wird. Dadurch entsteht hier eine erhöhte Ladekante, die beim Entladen oder Beladen schwerer Gegenstände hinderlich sein kann. Damit ein mit der Ladekante flächenbündiger Boden gebildet wird, werden in dem Kofferraum erhöhte Ladeböden eingelegt, die auch eine Aufteilung des Kofferraumes ermöglichen. Weitere Möglichkeit besteht in der Verwendung von variablen Böden, wobei diese Böden aus einer unteren in eine obere Stellung höhenverstellbar sind und so eine ebene Fläche mit der Ladekante bilden.

Solche Lösung ist z.B. aus der Patentschrift EP1511654 B1 bekannt, in der ein Kofferraum beschrieben ist, der in dem vorderen Bereich einen Hebelmechanismus aufweist, mit dessen Hilfe die Bodenplatte aus der unteren in die obere Stellung verstellt werden kann, in der die Bodenplatte vorne durch den Hebelmechanismus abgestützt wird und hinten an die Ladekante aufliegt. Ähnliche Ausführung ist auch in der Patentschrift EP2151348 beschrieben.

In der Patentschrift FR2821035 ist ein mehrteiliger Boden beschrieben, dessen Platten in der horizontalen Stellung durch die abgefederte aufklappbare Stütze abgestützt sind. Der Boden ist in dem Bereich des Bandes der zwei Platten abgestützt, seine Entriegelung erfolgt manuell durch das Wegdrücken des Hebels.

Die Patentschrift FR2877624 beschreibt eine Trennplatte des Kofferraumes, die an der Stütze angeordnet ist, welche aus einer zugeklappten Stellung, in der sie flächenbündig mit der Seitenwand ist, in eine aufgeklappte Stellung, in der an ihrer oberen Fläche die Trennwand des Kofferraumes abgestützt ist, aufgeklappt werden kann.

Aus der Patentschrift CZ2009-590 ist ein mehrteiliger verschiebbarer Ladeboden bekannt, der in einer Führung verschiebbar ist und eventuell eine Aufteilung des Kofferraumes ermöglicht, wobei der Ladeboden eine Feststellvorrichtung aufweist, welche die Bodenplatte gegen einen unerwünschten Vorschub arretiert.

Der Nachteil der angeführten Lösungen liegt in der relativ geringeren Variabilität, da die bekannten Lösungen der Raumaufteilung, die bei Fahrzeugen mit größerem Kofferraum verwendet werden, keine Höhenverstellung der Ladebodenplatte ermöglichen. Die bekannten Lösungen mit einer höhenverstellbaren Bodenplatte, die bei Fahrzeugen mit kleinerem Kofferraum verwendet werden, ermöglichen keine Aufteilung des Kofferraumes. Problematisch ist auch das Feststellen des Ladebodens in einzelnen Funktionsstellungen.

Die Patentschrift JP 2010076571 offenbart eine Kofferraumanordnung gemäß dem Oberbegriff des Anspruchs 1.

### Darstellung der Erfindung

Die Aufgabe wird durch eine Kofferraumanordnung mit den Merkmalen des Anspruchs 1 gelöst.

Die Darstellung der Erfindung liegt darin, dass die mittlere und die hintere Bodenplatte, welche die Ebene des multifunktional verstellbaren Ladebodens bilden, aus einer unteren Stellung, in der sie am Untergrund des Kofferraumes liegen, in eine obere Stellung verstellt werden können, in der sie flächenbündig mit der Schlossabdeckung am hinteren Querträger liegen, wobei die mittlere sowie hintere Bodenplatte in der unteren und oberen Stellung in eine stabile, den Kofferraum aufteilende Stellung verstellbar sind.

In der oberen Stellung wird der multifunktional verstellbare Ladeboden mit einer Feststellvorrichtung gesichert, die durch ein an der Unterseite der vorderen Bodenplatte angeordnetes Gehäuse, einem an der Unterseite der mittleren Bodenplatte angeordneten arretierenden Betätigungsfinger und eine an der Seitenwand angeordnete aufklappbare Stütze gebildet wird. Das Gehäuse weist einen schwenkbar angeordneten Feststellhebel und an der der Seitenwand anliegenden Seite eine Steuerungsfläche der Stütze, ferner eine Fixiernut mit Aussparung auf, wobei der T-förmige Feststellhebel einen Feststellzapfen und einen Hebel umfasst. Die Feststellvorrichtung umfasst weiter einen arretierenden Betätigungsfinger, der eine Steuerungsfläche des Hebels aufweist, die mit dem Hebel des arretierenden Betätigungsfingers mitwirkt, und eine viereckige aufklappbare Stütze. Diese weist an der Stützfläche eine Fixiernase auf, die mit der Fixiernut und der Aussparung an der Unterseite des Gehäuses zusammengreift, und ferner einen Haken mit Schrägfläche, der mit der Steuerungsfläche der Stütze des Gehäuses zusammengreift, und nicht zuletzt eine Einfassung, welche in der oberen Stellung des multifunktional verstellbaren Ladebodens in eine an der mittleren Bodenplatte ausgebildete Sicherungsnut eingreift. Wird der multifunktional verstellbare Ladeboden in der oberen Stellung zur Raumaufteilung des Kofferraumes genutzt, wird er weiter durch die in der Seitenwand ausgebildete Feststellöffnung, in die der Feststellzapfen eingreift und durch die Fixierausnehmung gesichert.

### Übersicht der Figuren der Zeichnungen

Die Erfindung wird näher anhand der Ausführungsbeispiele gemäß den beigefügten Zeichnungen erläutert, in denen die Fig. 1 eine perspektivische Ansicht des multifunktional verstellbaren Ladebodens, die Fig. 2 die schematische Seitenansicht des Kofferraumes mit dem Ladeboden in der unteren Stellung, wobei gestrichelt die den Kofferraum quer aufteilende Stellung dargestellt wird, die Fig. 3 die schematische Seitenansicht des Kofferraumes mit dem Ladeboden in der oberen Stellung, wobei gestrichelt die den Kofferraum quer aufteilende Stellung dargestellt wird, die Fig. 4 eine perspektivische Ansicht der Seitenwand mit der aufklappbaren Stütze, die Fig. 5 eine perspektivische Ansicht des Gehäuses mit dem Feststellhebel, die Fig. 6 eine perspektivische Unteransicht der Feststellvorrichtung beim Verstellen des Ladebodens aus der unteren in die obere Stellung, die Fig. 7 einen Schnitt der Seitenwand und die den Ladeboden tragende aufklappbare Stütze, die Fig. 8 eine perspektivische Unteransicht des Ladebodens in der oberen flachen Stellung, die Fig. 9 eine axiale Unteransicht des Ladebodens in der oberen Stellung mit der Aufteilung des Kofferraumes und die Fig. 10 eine axiale Unteransicht des Ladebodens in der Phase der Verstellung aus der oberen in die untere Stellung darstellt.

### Ausführungsbeispiel der Erfindung

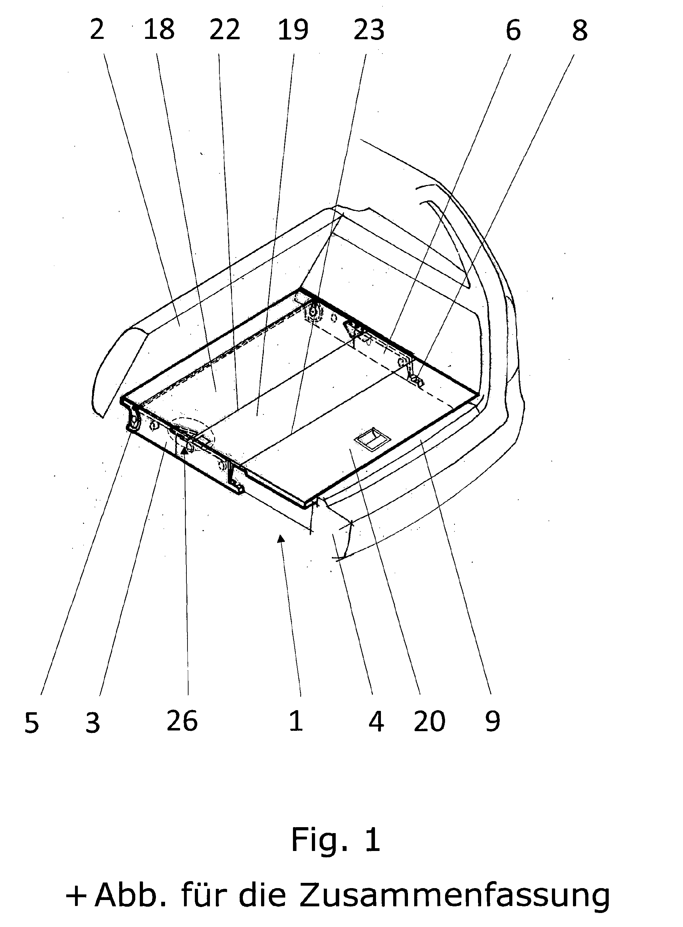

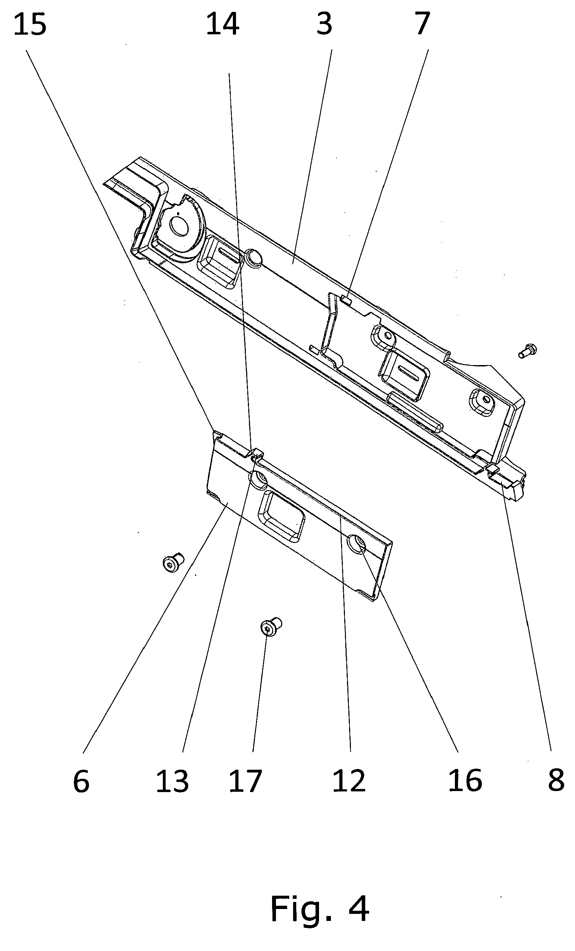

Wie den Fig. 1, 2, und 3 zu entnehmen ist, ist ein multifunktional verstellbarer Ladeboden 1 eines Kofferraumes des Kraftfahrzeuges im Kofferraum angeordnet, der vorne durch Rücksitzlehnen 2, seitlich durch die Seitenwände 3 und hinten durch einen hinteren Querträger 4 begrenzt ist. Im vorderen Bereich des Kofferraumes ist ein näher nicht spezifiziertes schwenkbares Hebelmechanismus 5 angeordnet, der die Führung des multifunktional verstellbaren Ladebodens 1 in einzelnen Verstellphasen besorgt. Die Seitenwände 3 des Fahrzeuges weisen aufklappbare Stützen 6, Feststellöffnungen 7 und Fixierausnehmungen 8 auf. Der hintere Querträger 4 weist eine Schlossabdeckung 9 auf. Die Fig. 4 stellt die aufklappbare Stütze 6 dar, die schwenkbar um eine mit der Längsachse des Fahrzeuges parallele Achse angeordnet ist. Sie kann eine eingeklappte Stellung, in der sie in der Ebene der Seitenwand 3 liegt, oder eine aufgeklappte Arbeitsstellung einnehmen, in der sie in das Kofferrauminnere aufgeklappt ist. Das Aufklappen der Stütze besorgt ein Federelement 10, das zwischen der Seitenwand 3 und der aufklappbaren Stütze 6 angeordnet ist. Im oberen Teil der aufklappbaren Stütze 6 ist eine Stützfläche 11 mit Einfassung 12 und ein Haken 13 mit Schrägfläche 14. Im vorderen Bereich weist die aufklappbare Stütze 6 eine Fixiernase 15 auf. Die aufklappbare Stütze 6 umfasst weiter Distanzöffnungen 16, durch welche Distanzbolzen 17 durchgehen, die mit der Seitenwand des Fahrzeuges verbunden sind.

Der in Fig. 1-3 dargestellte, multifunktional verstellbare Ladeboden 1 des Kofferraumes wird im Wesentlichen durch drei Bodenplatten gebildet, und zwar durch eine vordere Bodenplatte 18, eine mittlere Bodenplatte 19 und eine hintere Bodenplatte 20, die mit einem Teppich 21 bezogen und dadurch gegenseitig schwenkbar verbunden sind, und zwar so, dass die mittlere Bodenplatte 19 gegenüber der vorderen Bodenplatte 18 schwenkbar gegen den Uhrzeigersinn angeordnet ist, während die hintere Bodenplatte 20 gegenüber der mittleren Bodenplatte 19 schwenkbar im Uhrzeigersinn angeordnet ist. Der Teppich 21 bildet so einen vorderen Band 22 sowie einen hinteren Band 23. Bei einem ebenen Ladeboden liegen die vordere Bodenplatte 18 und die mittlere Bodenplatte 19 im Bereich des vorderen Bandes 22 gegenseitig frontal an. Im Bereich des hinteren Bandes 23 weist die mittlere Bodenplatte 19 eine Stütze 24 und die hintere Bodenplatte 20 eine Auflage 25 auf, die ineinander Eingreifen und bei Belastung des Ladebodens sich gegenseitig abstützen.

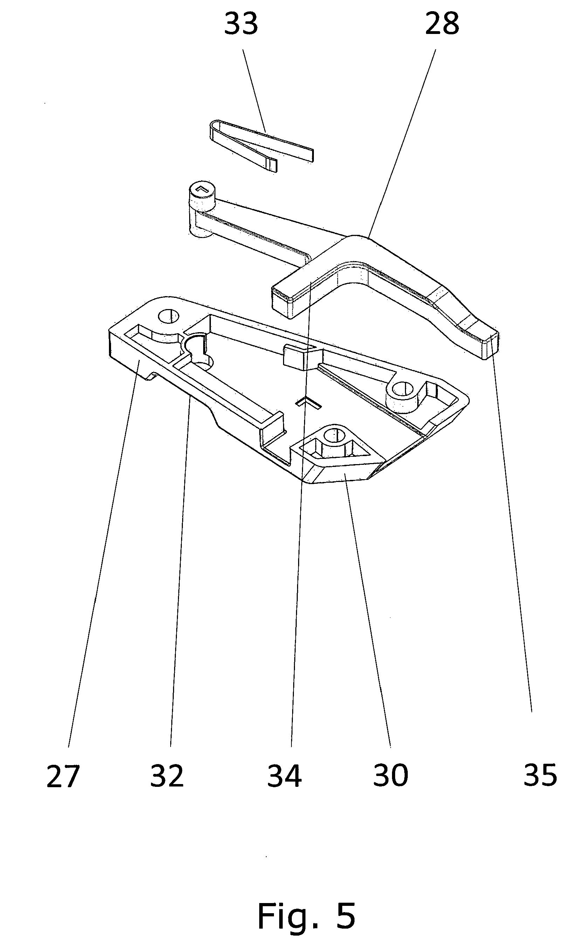

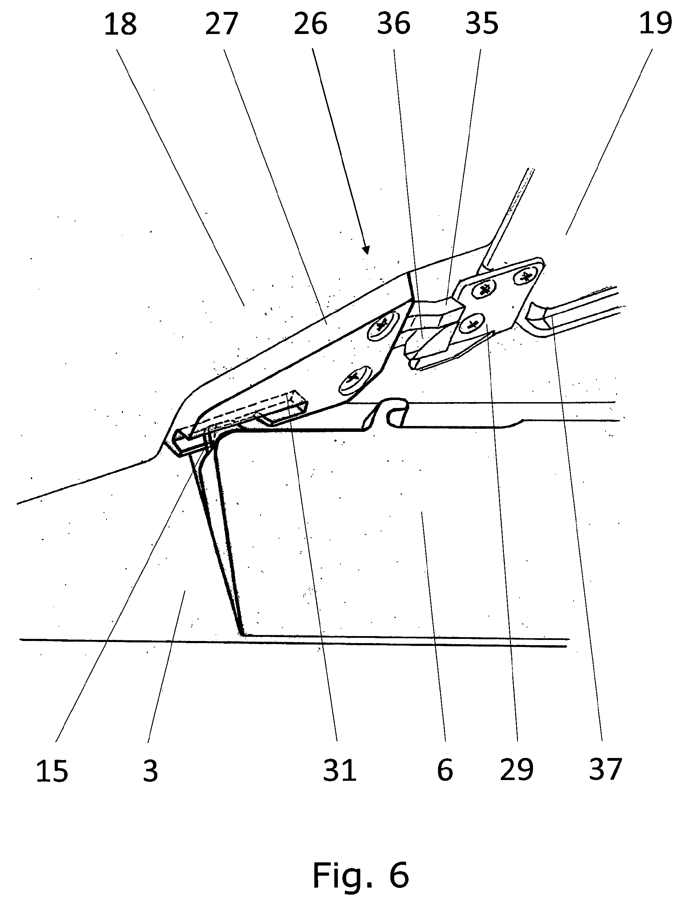

Im Bereich des vorderen Bandes 22 weisen die Bodenplatten 18, 19 an ihrer Unterseite eine Feststellvorrichtung 26 auf, die aus einem Gehäuse 27 mit einem schwenkbar angeordneten Feststellhebel 28, siehe Fig. 5, und einem arretierenden Betätigungsfinger 29, siehe Fig. 6, besteht. Das Gehäuse 27 ist an der vorderen Bodenplatte 18 angeordnet und weist eine Steuerungsfläche der Stütze 30 und eine Fixiernut 31 mit Aussparung 32 auf. Ferner umfasst es eine Feder 33, die auf den Feststellhebel 28 auswärts des Kofferraumes drückt. Der Feststellhebel 28 umfasst einen Feststellbolzen 34 und einen Hebel 35. Der arretierende Betätigungsfinger 29 ist mit einer Überlappung an der mittleren Bodenplatte 19 befestigt und weist eine Steuerungsfläche des Hebels 36 auf. Die mittlere Bodenplatte 19 weist an ihrer Unterseite entlang beider Seitenränder eine Sicherungsnut 37 auf.

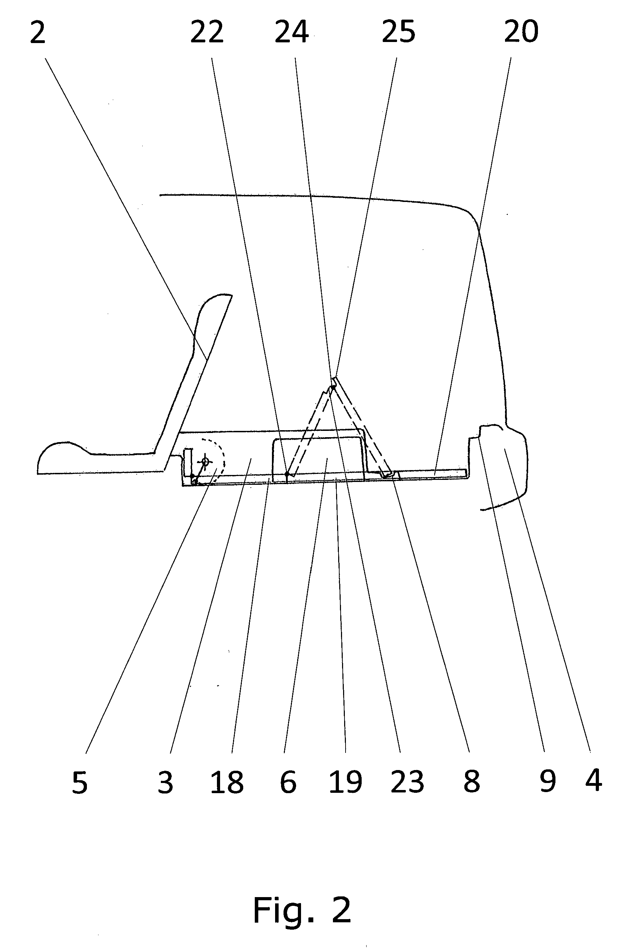

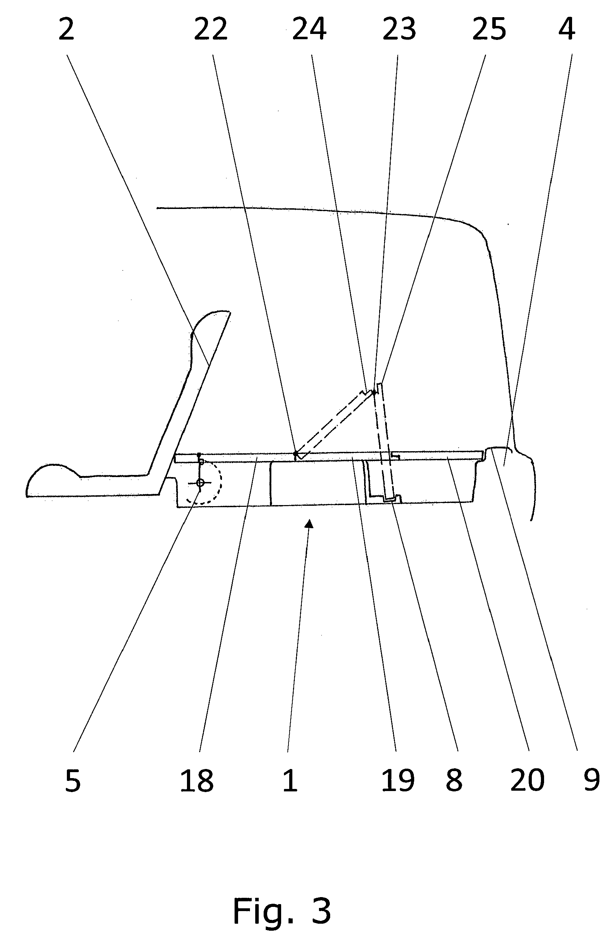

An den vorliegenden Bildern ist die Ausführung des multifunktional verstellbaren Ladebodens 1 gemäß der Erfindung dargestellt. Wie der Fig. 2 zu entnehmen ist, kann sich der multifunktional verstellbare Ladeboden 1 in der unteren Stellung zwischen den Seitenwänden 6 befinden, wenn er am Untergrund des Kofferraumes liegt, und der Kofferraum bezogen auf sein Innenvolumen maximal genutzt wird. Soll der Kofferraum aufgeteilt werden, werden gleichzeitig die mittlere Bodenplatte 19 und die hintere Bodenplatte 20 hochgehoben und nach der Verschwenkung um den hinteren Band 23 das Ende der hinteren Bodenplatte 20 in die Fixierausnehmung 8 eingeschoben, wodurch eine stabile Position einzelner Bodenplatten sichergestellt ist. Diese Queraufteilung ist auch in der oberen Stellung des Ladebodens 1 möglich, in der er flächenbündig mit der Ladekante bzw. der Schlossabdeckung 9 ist, wie der Fig. 3 zu entnehmen ist.

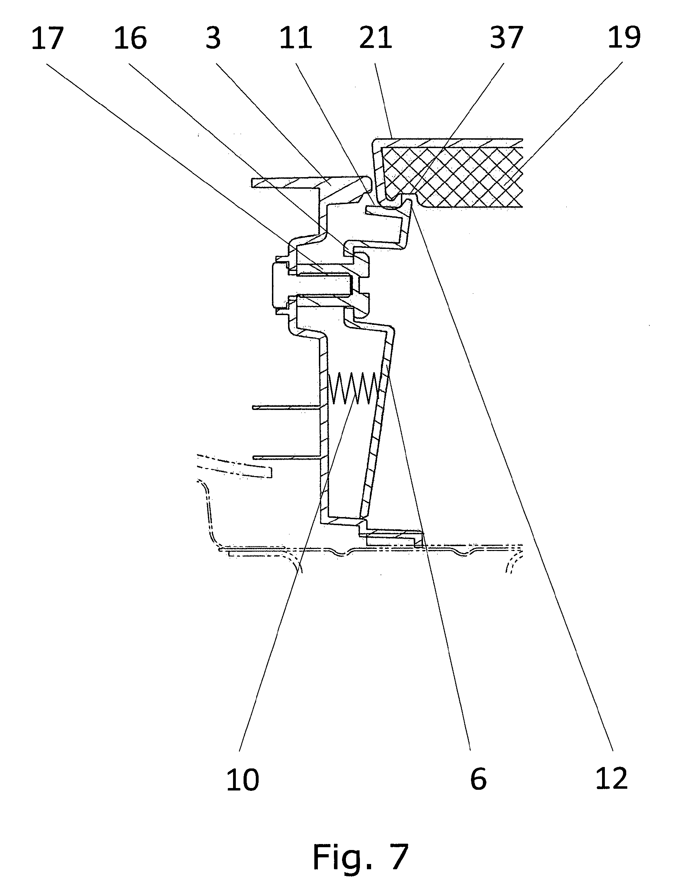

Soll der Ladeboden 1 in die obere Stellung verstellt werden, wird er in einer Schrägstellung so weit hochgehoben, bis die aufklappbaren Stützen 6 durch die Einwirkung der Federelemente 10 aus den Seitenwänden 3 aufgeklappt werden. Nach deren Aufklappen wird der Ladeboden 1 leicht heruntergelassen, damit die Fixiernase 15 in die Fixiernut 31 am Gehäuse 27 eingreift. Das Gehäuse bildet in dieser Stellung die Auflage für den gesamten Ladeboden, siehe Fig. 6. Durch Ziehen nach hinten und gleichzeitige Verschwenkung um die Fixiernase 15 wird der Ladeboden 1 mit Hilfe des schwenkbaren Hebelmechanismus 5 in die obere Stellung umgeklappt, siehe Fig. 7.

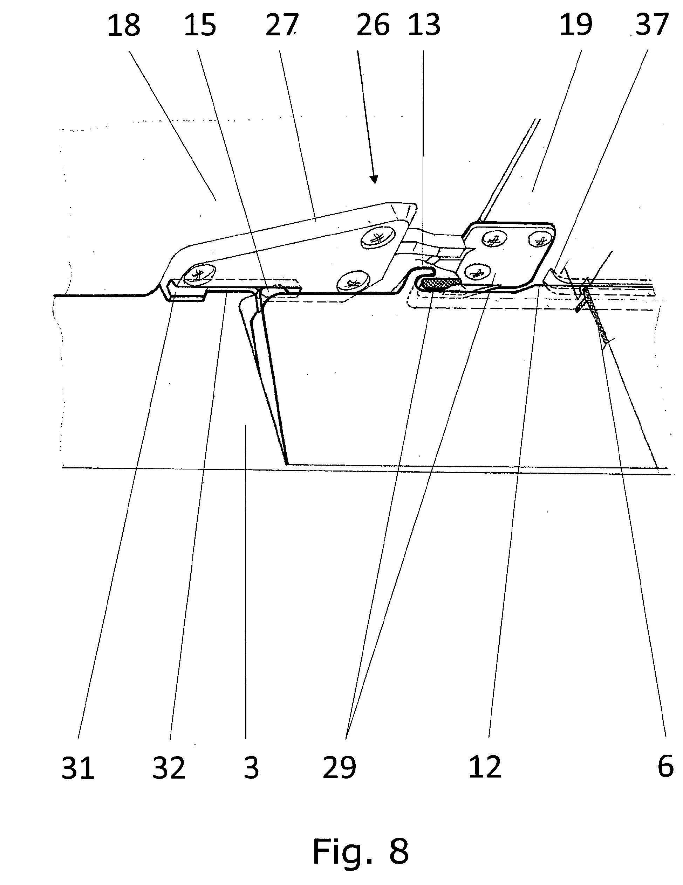

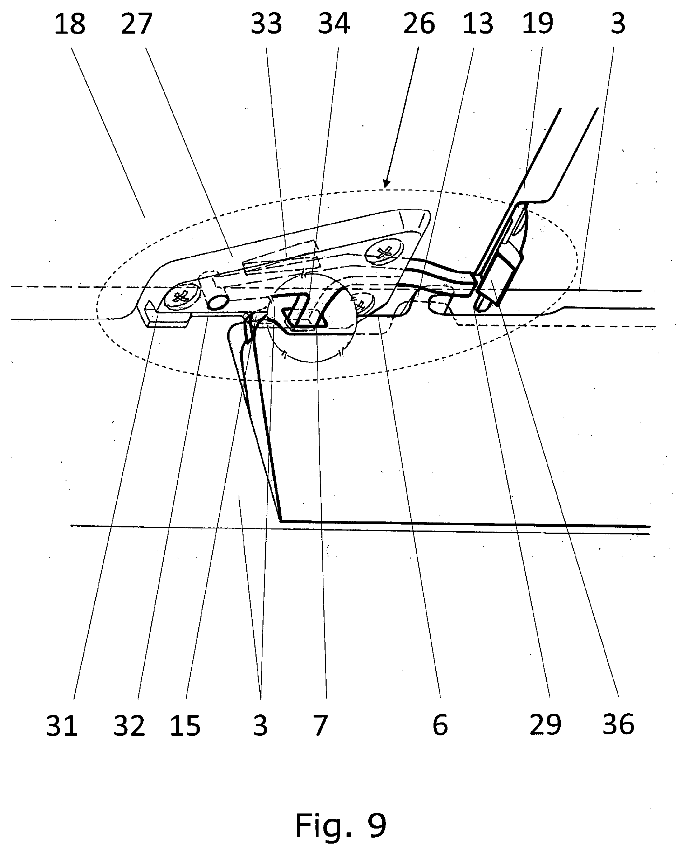

In dieser Stellung ist der multifunktional verstellbare Ladeboden 1 vorne mit dem schwenkbaren Hebelmechanismus 5 gesichert, der sich in seiner Endstellung befindet. Hinten lehnt sich der multifunktional verstellbare Ladeboden 1 an der Schlossabdeckung 9 an und im mittleren Segment im Bereich des vorderen Bandes 22 ist der multifunktional verstellbare Ladeboden 1 mit der aufklappbaren Stütze 6 abgestützt, wobei die Einfassung 12 in die Sicherungsnut 37 an der Unterseite der mittleren Bodenplatte 19 eingreift, siehe Fig. 7 und 8, wodurch ein ungewolltes oder zufälliges Zuklappen der aufklappbaren Stütze 6 und somit auch das Einfallen des multifunktional verstellbaren Ladebodens 1 verhindert wird. Nach dem Umklappen des multifunktional verstellbaren Ladebodens 1 in die obere Stellung wird auch der arretierende Betätigungsfinger 29 in den Haken 13 an der Stützfläche 11 der aufklappbaren Stütze 6 eingesteckt, siehe Fig. 8. Dadurch wird das Aufheben der mittleren Bodenplatte 19 bei Einwirkung der Belastungskraft auf die hintere Bodenplatte 20 verhindert. Wie in Fig. 2 bereits dargestellt wurde, kann der Kofferraum auch in dieser Stellung durch das Anheben und gegenseitige Verschwenkung der mittleren Bodenplatte 19 und der hinteren Bodenplatte 20 quer aufgeteilt werden. In dieser Stellung wird der multifunktional verstellbare Ladeboden 1 gegen ungewolltes Einfallen doppelt gesichert. Erstens durch die Fixiernase 15 und die Fixiernut 31 im Gehäuse 27. Zweite Sicherung gegen eine eventuelle Verschiebung und nachfolgendes Einfallen stellt die Feststellvorrichtung 26 dar. Dies wird dadurch erreicht, dass nach der Verschwenkung der mittleren 19 und hinteren Bodenplatte 20 um ein Winkel größer als 20° der arretierende Betätigungsfinger 29 mit Steuerungsfläche des Hebels 36 wegrückt. Dadurch wird die Verschwenkung des Feststellhebels 28 über den Hebel 35 ermöglicht, der durch die Einwirkung der Feder 33 auswärts des Kofferraumes verschoben wird und nachfolgend greift der Feststellzapfen 34 in die Feststellöffnung 7 in der Seitenwand 3 ein, siehe Fig. 9. In der Finalphase wird die mittlere Bodenplatte 20 sowie hintere Bodenplatte 21 verschwenkt, die in die Fixierausnehmung 8 in der Seitenwand 3 eingeschoben wird, siehe Fig. 1 und 2.

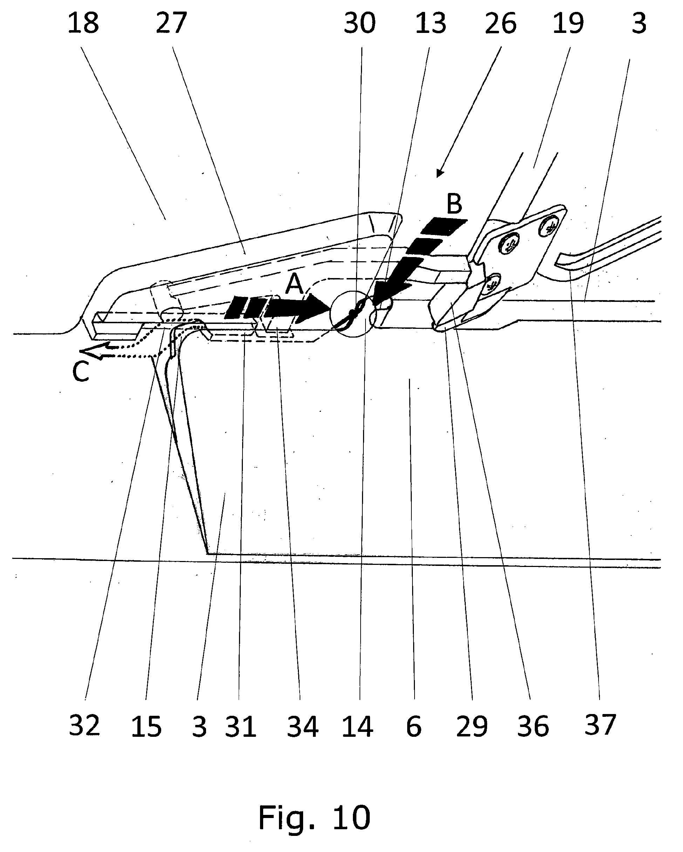

Das Umklappen des multifunktional verstellbaren Ladebodens 1 aus der oberen in die untere Stellung erfolgt wie folgt. Die mittlere Bodenplatte 19 und die hintere Bodenplatte 20 werden angehoben und um ein Winkel kleiner als 20° verschwenkt, bei dem die Steuerungsfläche des Hebels 36 des arretierenden Betätigungsfingers 29 auf den Hebel 35 drückt, wobei der Feststellzapfen 34 im Gehäuse 27 eingeschoben ist. Der multifunktional verstellbare Ladeboden 1 ist dadurch entriegelt und kann verschoben werden. Durch nachfolgendes Ziehen des multifunktional verstellbaren Ladebodens 1 nach hinten beginnt die Steuerungsfläche des Gehäuses 30 auf die Schrägfläche 14 des Hakens 13 der aufklappbaren Stütze 6 zu wirken (Fig. 10 in Richtung des Pfeils A), wodurch diese Richtung Seitenwand 3 weggedrückt wird (Fig. 10 in Richtung des Pfeils B). Gleichzeitig verschiebt sich die Fixiernase 15 in der Nut des Gehäuses 27 in der Richtung zur Aussparung 32 der Fixiernut 31, sodass beim Beginn des Wegdrückens der aufklappbaren Stütze 6 die Fixiernase 15 durch die Aussparung 32 durchgehen kann (Fig. 10 siehe Pfeil C). Sobald die aufklappbare Stütze 6 bis in die Ebene der Seitenwand 3 weggedrückt wird, fällt der multifunktional verstellbare Ladeboden 1 in die untere Stellung herunter.

### Bezugszeichenliste

- 1: Multifunktional verstellbarer Ladeboden
- 2: Rücksitzlehne
- 3: Seitenwand
- 4: hinterer Querträger
- 5: schwenkbares Hebelmechanismus
- 6: aufklappbare Stütze
- 7: Feststellöffnung
- 8: Fixierausnehmung
- 9: Schlossabdeckung
- 10: Federelement
- 11: Stützfläche
- 12: Einfassung
- 13: Haken
- 14: Schrägfläche
- 15: Fixiernase
- 16: Distanzöffnung
- 17: Distanzbolzen
- 18: vordere Bodenplatte
- 19: mittlere Bodenplatte
- 20: hintere Bodenplatte
- 21: Teppich
- 22: vorderer Band
- 23: hinterer Band
- 24: Stütze
- 25: Auflage
- 26: Feststellvorrichtung
- 27: Gehäuse
- 28: Feststellhebel
- 29: arretierender Betätigungsfinger
- 30: Steuerungsfläche der Stütze
- 31: Fixiernut
- 32: Aussparung
- 33: Feder
- 34: Feststellzapfen
- 35: Hebel
- 36: Steuerungsfläche des Hebels
- 37: Sicherungsnut

## Patentansprüche

1. Kofferraumanordnung mit Seitenwänden (3) eines Fahrzeuges, Rücksitzlehnen (2), einem hinteren Querträger (4) mit Schlossabdeckung und einem multifunktional verstellbaren Ladeboden (1) des Kofferraumes, der zwischen den Seitenwänden, (3), dem Rücksitzlehnen (2) und dem hinteren Querträger (4) mit Schlossabdeckung angeordnet ist, wobei der multifunktional verstellbare Ladeboden (1) aus einer vorderen Bodenplatte (18), einer mittleren Bodenplatte (19) und einer hinteren Bodenplatte (20) besteht, die gegenseitig schwenkbar verbunden sind, wobei die vordere Bodenplatte (18) mit einem schwenkbaren Hebelmechanismus (5) verbunden ist, der an den Seitenwänden (3) angeordnet ist, welche Stützen (6) mit Stützflächen (11) aufweisen, wobei der multifunktional verstellbare Ladeboden (1) in dem den Seitenwänden (3) anliegenden Berührungsbereich der vorderen (18) mit der mittleren (19) Bodenplatte eine Feststellvorrichtung (26) aufweist, **dadurch gekennzeichnet, dass** die Stützen (6) aufklappbar sind und dass die vordere, mittlere und hintere Bodenplatte (18, 19, 20), welche die Ebene des multifunktional verstellbaren Ladebodens (1) bilden, aus einer unteren Stellung, in der sie am Untergrund des Kofferraumes liegen, in eine obere Stellung verstellt werden können, in der sie flächenbündig mit der Schlossabdeckung (9) am hinteren Querträger (4) liegen, wobei die mittlere sowie hintere Bodenplatte (19, 20) in der unteren und oberen Stellung in eine stabile, den Kofferraum aufteilende Stellung verstellbar sind.

2. Kofferraumanordnung nach Anspruch 1 **dadurch gekennzeichnet, dass** die Feststellvorrichtung (26) durch ein an der Unterseite der vorderen Bodenplatte (18) angeordnetes Gehäuse (27), einen an der Unterseite der mittleren Bodenplatte (19) angeordneten arretierenden Betätigungsfinger (29) und eine der an den Seitenwänden (3) angeordneten aufklappbaren Stützen (6) gebildet wird.

3. Kofferraumanordnung nach Anspruch 2 **dadurch gekennzeichnet**, **das**s das Gehäuse (27) einen schwenkbar angeordneten Feststellhebel (28) und an der der Seitenwand (3) anliegenden Seite eine Steuerungsfläche (30) der Stütze (6) aufweist und ferner eine Fixiernut (31) mit Aussparung (32) umfasst.

4. Kofferraumanordnung nach Anspruch 3 **dadurch gekennzeichnet**, **das**s der T-förmige Feststellhebel (28) einen Feststellzapfen (34) und einen Hebel (35) umfasst.

5. Kofferraumanordnung nach Anspruch 2 **dadurch gekennzeichnet**, **das**s der arretierende Betätigungsfinger (29) eine Steuerungsfläche des Hebels (36) aufweist, die mit dem Hebel (35) des arretierenden Betätigungsfingers (29) mitwirkt.

6. Kofferraumanordnung nach Anspruch 2 **dadurch gekennzeichnet, dass** die eine aufklappbare Stütze (6) viereckig ist und an der Stützfläche (11) eine Fixiernase (15) aufweist, die mit der Fixiernut (31) und der Aussparung (32) an der Unterseite des Gehäuses (27) zusammengreift, und ferner einen Haken (13) mit Schrägfläche (14), der mit der zum Gehäuse (27) gehörenden Steuerungsfläche (30) der einen Stütze (6) zusammengreift, und nicht zuletzt eine Einfassung (12), welche in der oberen Stellung des multifunktional verstellbaren Ladebodens (1) in eine an der mittleren Bodenplatte (19) ausgebildete Sicherungsnut (37) eingreift.

7. Kofferraumanordnung nach Anspruch 4 **dadurch gekennzeichnet, dass** die Seitenwand (3) eine Feststellöffnung (7) aufweist, in die der Feststellzapfen (34) eingreift, wenn der multifunktional verstellbare Ladeboden (1) in der oberen Stellung zur Raumaufteilung des Kofferraumes genutzt wird.

8. Kofferraumanordnung nach Anspruch 1 **dadurch gekennzeichnet, dass** die Seitenwand (3) eine Fixierausnehmung (8) aufweist.

## Claims

1. Luggage compartment arrangement having side walls (3) of a vehicle, rear seat backs (2), a rear crossmember (4) with a lock cover and a multifunctionally adjustable loading floor (1) of the luggage compartment, which loading floor (1) is arranged between the side walls (3), the rear seat backs (2) and the rear crossmember (4) with a lock cover, the multifunctionally adjustable loading floor (1) consisting of a front floor panel (18), a middle floor panel (19) and a rear floor panel (20) which are connected such that they can be pivoted with respect to one another, the front floor panel (18) being connected to a pivotable lever mechanism (5) which is arranged on the side walls (3) which have supports (6) with supporting faces (11), the multifunctionally adjustable loading floor (1) having a locking device (26) in the contact region of the front floor panel (18) with the middle floor panel (19), in which contact region the loading floor (1) bears against the side walls (3), **characterized in that** the supports (6) can be folded up, and **in that** the front, middle and rear floor panel (18, 19, 20) which form the plane of the multifunctionally adjustable loading floor (1) can be adjusted out of a lower position, in which they lie on the bottom of the luggage compartment, into an upper position, in which they lie such that they are flush-mounted with the lock cover (9) on the rear crossmember (4), it being possible for the middle and rear floor panel (19, 20) to be adjusted in the lower and upper position into a stable position which divides the luggage compartment.

2. Luggage compartment arrangement according to Claim 1, **characterized in that** the locking device (26) is formed by a housing (27) which is arranged on the underside of the front floor panel (18), an arresting actuating finger (29) which is arranged on the underside of the middle floor panel (19), and one of the supports (6) which can be folded up and are arranged on the side walls (3).

3. Luggage compartment arrangement according to Claim 2, **characterized in that** the housing (27) has a pivotably arranged locking lever (28) and, on the side which bears against the side wall (3), a control face (30) of the support (6), and, furthermore, comprises a fixing groove (31) with a cut-out (32).

4. Luggage compartment arrangement according to Claim 3, **characterized in that** the T-shaped locking lever (28) comprises a locking pin (34) and a lever (35).

5. Luggage compartment arrangement according to Claim 2, **characterized in that** the arresting actuating finger (29) has a control face of the lever (36), which control face cooperates with the lever (35) of the arresting actuating finger (29).

6. Luggage compartment arrangement according to Claim 2, **characterized in that** the one support (6) which can be folded up is rectangular and has a fixing lug (15) on the supporting face (11), which fixing lug (15) engages together with the fixing groove (31) and the cut-out (32) on the underside of the housing (27), and, furthermore, has a hook (13) with an oblique face (14), which hook (13) engages together with the control face (30), belonging to the housing (27), of the one support (6), and last but not least has a surround (12) which, in the upper position of the multifunctionally adjustable loading floor (1), engages into a securing groove (37) which is configured on the middle floor panel (19).

7. Luggage compartment arrangement according to Claim 4, **characterized in that** the side wall (3) has a locking opening (7), into which the locking pin (34) engages when the multifunctionally adjustable loading floor (1) is used in the upper position for dividing up the space of the luggage compartment.

8. Luggage compartment arrangement according to Claim 1, **characterized in that** the side wall (3) has a fixing recess (8).

## Revendications

1. Agencement de coffre ayant des parois latérales (3) d'un véhicule, un dossier de siège arrière (2), une traverse arrière (4) avec un recouvrement de serrure et une surface de chargement réglable de manière multifonctionnelle (1) du coffre, qui est disposé entre les parois latérales (3), le dossier de siège arrière (2) et la traverse arrière (4) avec le recouvrement de serrure, la surface de chargement réglable de manière multifonctionnelle (1) se composant d'une plaque de fond avant (18), d'une plaque de fond centrale (19) et d'une plaque de fond arrière (20), qui sont assemblées de manière à pouvoir pivoter les unes par rapport aux autres, la plaque de fond avant (18) étant connectée à un mécanisme de levier pivotant (5) qui est disposé au niveau des parois latérales (3) qui présentent des appuis (6) avec des surfaces d'appui (11), la surface de chargement réglable de manière multifonctionnelle (1) présentant, dans la région de contact de la plaque de fond avant (18) avec la plaque de fond centrale (19), s'appliquant contre les parois latérales (3), un dispositif de fixation (26), **caractérisé en ce que** les appuis (6) peuvent être rabattus vers le haut et **en ce que** les plaques de fond avant, centrale et arrière (18, 19, 20) qui forment le plan de la surface de chargement réglable de manière multifonctionnelle (1) peuvent être déplacées d'une position inférieure dans laquelle elles se situent sur le support inférieur du coffre, dans une position supérieure dans laquelle elles s'appliquent en affleurement avec le recouvrement de serrure (9) au niveau de la traverse arrière (4), la plaque de fond centrale et la plaque de fond arrière (19, 20), dans la position inférieure et dans la position supérieure, pouvant être réglées dans une position stable divisant le coffre.

2. Agencement de coffre selon la revendication 1, **caractérisé en ce que** le dispositif de fixation (26) est formé par un boîtier (27) disposé au niveau du côté inférieur de la plaque de fond avant (18), un doigt d'actionnement (29) à blocage disposé au niveau du côté inférieur de la plaque de fond centrale (19) et l'un des appuis (6) rabattables vers le haut disposé au niveau des parois latérales (3).

3. Agencement de coffre selon la revendication 2, **caractérisé en ce que** le boîtier (27) comprend un levier de réglage (28) disposé de manière pivotante et présente, au niveau du côté s'appliquant contre la paroi latérale (3), une surface de commande (30) de l'appui (6) et comprend en outre une rainure de fixation (31) avec un évidement (32).

4. Agencement de coffre selon la revendication 3, **caractérisé en ce que** le levier de réglage (28) en forme de T comprend un tourillon de fixation (34) et un levier (35).

5. Agencement de coffre selon la revendication 2, **caractérisé en ce que** le doigt d'actionnement (29) à blocage présente une surface de commande du levier (36), qui coopère avec le levier (35) du doigt d'actionnement (29) à blocage.

6. Agencement de coffre selon la revendication 2, **caractérisé en ce que** l'un des appuis(6) rabattables vers le haut est quadrilatéral et présente au niveau de la surface d'appui (11) un nez de fixation (15) qui s'engage avec la rainure de fixation (31) et l'évidement (32) au niveau du côté inférieur du boîtier (27), ainsi qu'un crochet (13) avec une surface oblique (14) qui s'engage avec la surface de commande (30) de l'un des appuis (6) appartenant au boîtier (27), et finalement une bordure (12) qui s'engage, dans la position supérieure de la surface de chargement (1) réglable de manière multifonctionnelle, dans une rainure de fixation (37) réalisée au niveau de la plaque de fond centrale (19).

7. Agencement de coffre selon la revendication 4, **caractérisé en ce que** la paroi latérale (3) présente une ouverture de fixation (7) dans laquelle s'engage le tourillon de fixation (34), lorsque la surface de chargement (1) réglable de manière multifonctionnelle est utilisée dans la position supérieure pour diviser l'espace du coffre.

8. Agencement de coffre selon la revendication 1, **caractérisé en ce que** la paroi latérale (3) présente un évidement de fixation (8).
